# EUROPEAN PATENT APPLICATION

(11) **EP 3 945 650 A1**
(43) Date of publication of application: **02.02.2022**
(21) Application number: 20188407.9
(22) Date of filing: 29.07.2020
(51) Int. Cl.: H02H 1/00, H02H 3/00, H02H 3/18, H02H 7/26

(54) **ELECTRONIC CIRCUIT BREAKER CONTROL UNIT**

(71) Applicant: ABB Schweiz AG, 5400 Baden (CH)
(72) Inventor: VENERUSO, Gennaro, 20010 Pregnana Milanese (IT)
(74) Representative: Maiwald Patent- und Rechtsanwaltsgesellschaft mbH

(57) **Abstract**

The invention relates to the field of electronic circuit breaker control units, particularly for Residual Current Devices, RCDs. The electronic circuit breaker control unit (100) comprises a first thyristor (162), configured for driving a breaker (50) when conducting; and a control subunit (180). The control subunit (180) comprises a second thyristor (182), and a filter module (185), arranged in series with the second thyristor (182) via a first node (183), wherein the first node (183) is connected to an input (161) of the first thyristor (162) and is configured for driving the first thyristor (162), when an input (181) of the second thyristor (182) is driven by a fault detector (190).

## Description

### Field of the Invention

The invention relates to the field of electronic circuit breaker control units, particularly for residual current devices (RCDs). The invention further relates to an arc fault detection device, and to a use of these devices.

### Background

When installing an electronic residual-current device or an arc fault detection device in a house, correct installation is necessary. In at least some systems, those devices would not work correctly, when arranged upstream, as seen from a breaking switch. A malfunction of those devices may lead to serious consequences, e.g. to harm persons. Therefore, a residual-current device that is allowed to be arranged both upstream and downstream would be desirable.

### Description

It is therefore an objective of the invention to provide an improved residual-current device. This objective is achieved by the subject-matter of the independent claims. Further embodiments are evident from the dependent patent claims and the following description.

One aspect relates to an electronic circuit breaker control unit, which comprises a first thyristor, configured for driving a breaker when conducting; and a control subunit, comprising a second thyristor, and a filter module, arranged in series with the second thyristor via a first node, wherein the first node is connected to an input of the first thyristor and is configured for driving the first thyristor, when an input of the second thyristor is driven by a fault detector.

The electronic circuit breaker control unit may be configured for controlling an electronic circuit breaker. The electronic circuit breaker control unit may be part or a subsystem of an electronic circuit breaker, or may be delivered as a stand-alone device, which may be used for assembling, possibly with other components, an electronic circuit breaker, for instance a residual-current device, RCD, an arc fault detection device, AFDD, or an arc fault circuit interrupter, AFCI.

The breaker, which is driven by the first thyristor, may be a mechanical breaker. The breaker may interrupt both lines of an electric supply, i.e. Line and Neutral. Alternatively, it may only interrupt one of Line or Neutral, typically Line. In cases when a mechanical breaker is not prescribed - possibly in some countries and/or due to legal changes -, the breaker may be - additionally or as an alternative - a semiconductor switch, e.g. a triac, IGBT, or the like.

The filter module may, in the simplest case, be an RC module, or may be a variation of an RC module - e.g. composed with a correspondent impedance and/or electronic components - and/or a more sophisticated filter module, e.g. comprising semiconductors. The fault detector may be a low cost fault detector integrated circuit (IC), for example of type FAN4146ESX by Fairchild, a residual-current detector like NJU9102 by NJR, and/or similar types.

This electronic circuit breaker control unit advantageously allows an arrangement both upstream and downstream, which may contribute to make electrical installation easier and effectively safer.

In various embodiments, the control subunit is supplied by a power supply, which is connected to a main power supply in a way that it is not interruptable by the breaker. This could be implemented, for instance, by a direct connection of the power supply to AC-lines Line or Neutral or respective DC-lines. Additionally, there may be components between the AC-lines, or DC-lines, - the main power supply - and the feeding inputs of the power supply module. Generally, the power supply module is fed before the breaker, and thus not interruptable by the breaker. These embodiments may further contribute to make electrical installation easier and effectively safer, because this electronic circuit breaker control unit advantageously works, when arranged both upstream or downstream, before or behind the breaker, and/or on AC-lines or DC-lines.

In some embodiments, the control subunit is supplied by a power supply, whose power of the power supply is interruptable by the breaker, and the mechanical breaker is configured to interrupt power from the power supply, when the first thyristor is conducting. These embodiments may be particularly advantageous for DC circuit breakers, but also, of course, applicable for AC circuit breakers. The AC frequency may be "standard" 50 Hz or 60 Hz, but may also be applicable to higher frequencies, e.g. produced by a switching power supply and/or other devices using higher frequencies for power supply purposes.

In various embodiments, the filter module comprises a Zener-diode arranged between the first node and a resistor of the filter module. The Zener-diode advantageously limits and stabilizes the voltage in the first node. The resistor limits current flowing through the filter module, so that most of the current flowing through the second thyristor will go through the diode and then to the input-gate of the first thyristor. Alternative implementations of the filter module are shown, e.g., in the figures.

In various embodiments, a diode is arranged between the first node and the input of the first thyristor. This advantageously functions as a decoupling diode, used in order to provide a one-way driving action from the first node to the first thyristor, and not the other way.

In an embodiment, the fault detector outputs a one-shot pulse when detecting a fault. The one-shot pulse may last less than 2 ms, particularly less than 1 ms, e.g. less than 0.5 ms. The fault may be, e.g., a residual-current fault, an arc fault, ground fault, and/or grounded neutral fault. This embodiment allows the use of various types of fault detector. In alternative embodiments, other fault detectors with other types of outputs may be used.

In various embodiments, an inductor is arranged between the first thyristor and a Line feed wire and/or a Neutral feed wire. This advantageously acts as a current snubber, limiting current derivative during eventual voltage surges between Line and Neutral.

An aspect relates to an arc fault detection device, AFDD, an arc fault circuit interrupter, AFCI, and/or a residual-current device, RCD, comprising electronic circuit breaker control unit as described above and/or below.

An aspect relates to a use of an electronic circuit breaker control unit as described above and/or below or a device described above and/or below for interrupting a main supply when a fault is detected on the main supply.

An aspect relates to a use of an electronic circuit breaker control unit as described above and/or below, wherein the main supply is an AC line or a DC line.

For further clarification, the invention is described by means of embodiments shown in the figures. These embodiments are to be considered as examples only, but not as limiting.

### Brief Description of the Drawings

The figures depict:
- **Fig. 1**: a schematic circuit diagram of an electronic circuit breaker control unit according to the state of the art;
- **Fig. 2a** and **2b**: arrangements of an electronic circuit breaker control unit according to state of the art;
- **Fig. 3a** and **3b**: effects of the electronic circuit breaker control unit of **Fig. 2a** and **2b****;**
- **Fig. 4a** and **4b**: arrangements of an electronic circuit breaker control unit according to an embodiment;
- **Fig. 5a** and **5b**: effects of the electronic circuit breaker control unit of **Fig. 4a** and **4b****;**
- **Fig. 6a** and **6b**: arrangements of an electronic circuit breaker control unit according to an embodiment with more details;
- **Fig. 7a** and **7b**: further arrangements of an electronic circuit breaker control unit according to an embodiment with more details;
- **Fig. 8**: a schematic circuit diagram of an electronic circuit breaker control unit according to an embodiment;
- **Fig. 9**: a further schematic circuit diagram of an electronic circuit breaker control unit according to an embodiment;
- **Fig. 10a** to **10c**: screenshots of internal signals on nodes of an electronic circuit breaker control unit according to an embodiment;
- **Fig. 11a** to **11h**: a couple of implementation-alternatives for a filter module of an electronic circuit breaker control unit according to an embodiment.

### Detailed Description of Embodiments

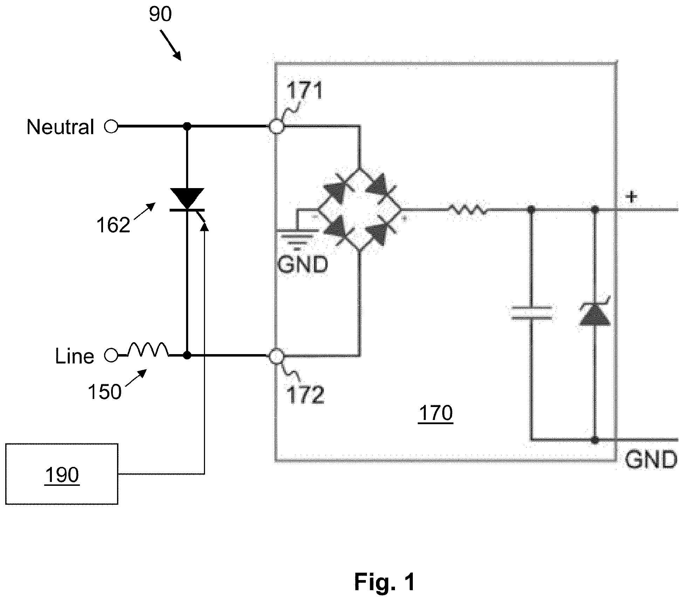

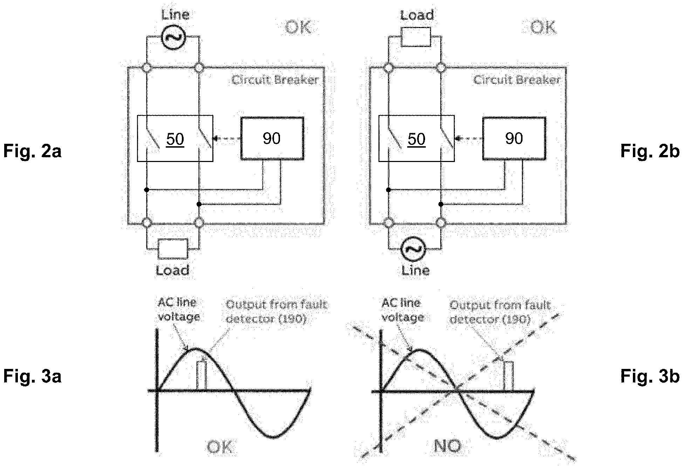

**Fig. 1** shows a schematic circuit diagram of an electronic circuit breaker control unit 90 according to the state of the art. The circuit breaker control unit 90 comprises a first thyristor 162 arranged on an AC side of the rectifier internal to control unit 90. The first thyristor or Silicon Controlled Rectifier, SCR, 162 is controlled by a fault detector 190. When the first thyristor 162 is conducting, an inductor or coil 150 gets a current high enough to trip, thus steering, e.g., a breaker 50 (see **Fig. 2a** or **2b**), which interrupts at least one of the AC-line wires Line or Neutral. The electronic circuit breaker control unit 90 further comprises a power supply 170, e.g. to supply the fault detector 190 and/or other control elements.

**Fig. 2a** and **2b** show arrangements of the electronic circuit breaker control unit 90. While the circuit breaker control unit 90 of **Fig. 2a** is arranged downstream from a breaker 50, **Fig. 2b** shows an arrangement upstream from the breaker 50. **Fig. 3a** and **3b** show effects of the electronic circuit breaker control units 90 of **Fig. 2a** and **2b****.** If, for instance, a fault detector 190 is used, which is configured to output a signal of short duration - a "one-shot pulse". When the fault detector 190 outputs the pulse during the "positive wave" of an AC-line (see **Fig. 3a**), then the first thyristor 162 (see **Fig. 1**) is driven correctly and makes the coil 150 trip. However, when the fault detector 190 outputs the pulse during the "negative wave" of an AC-line (see **Fig. 3b**), then the first thyristor 162 fails to make the coil 150 trip, and the electronic circuit breaker control unit 90 does not work as desired. In other words: This solution does not work for specific kinds of faults, and/or specific ways of driving the gate of the first thyristor 162. For instance, this kind of fault may happen only during the "negative" part of the AC line voltage, which is, at least in some kind of tests and/or in real-world applications, prescribed by standards for type A RCDs. In addition, if the fault detector outputs only short time duration pulses - as at least for some types of low cost ICs -, there may be a risk that the SCR cannot be closed to trip the breaker. This behavior of an electronic circuit breaker control unit 90 according to state of the art may be considered as an essential drawback.

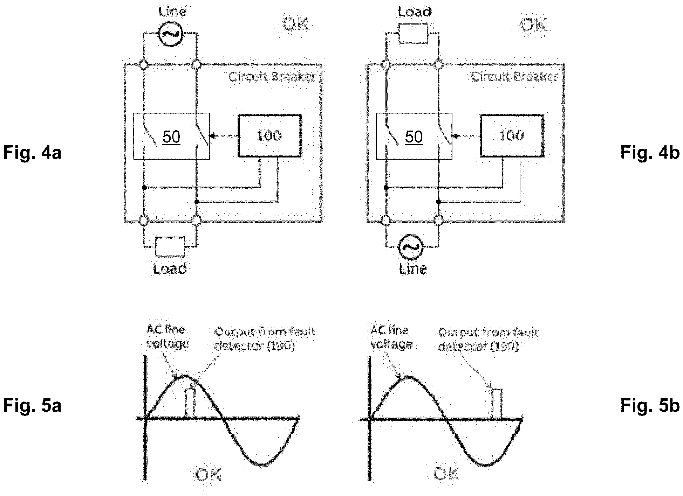

**Fig. 4a** and **4b** show arrangements corresponding to **Fig. 2a** and **2b****,** but using an electronic circuit breaker control unit 100 according to an embodiment. **Fig. 5a** and **5b** show its effects. It clearly can be seen (and as elaborated above and/or below) that the electronic circuit breaker control unit 100 works for both arrangements and, particularly, when driven both by a pulse during the "positive wave" and the "negative wave" of an AC-line.

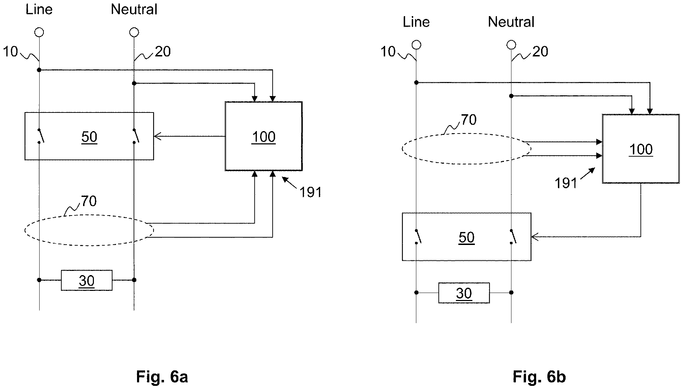

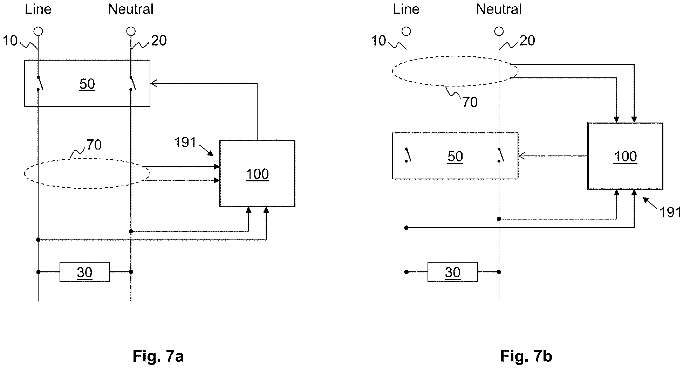

**Fig. 6a** and **6b** show upstream arrangements of an electronic circuit breaker control unit 100 according to an embodiment with more details. These upstream arrangements connect the power supply of electronic circuit breaker control unit 100 "directly" to the Line wire 10 and the Neutral wire 20, i.e. before the breaker 50. A sensor 70 for detecting a fault, e.g., a residual-current, arc fault, ground fault, and the like, goes to an input 191 of the circuit breaker control unit 100. In **Fig. 6a****,** the sensor 70 is arranged behind the breaker 50, in **Fig. 6b****,** the sensor 70 is arranged before the breaker 50. After the breaker 50, a load 30 is arranged. **Fig. 7a** and **7b** show corresponding downstream arrangements of the electronic circuit breaker control unit 100. The downstream arrangements connect the power supply of electronic circuit breaker control unit 100 behind the breaker 50.

Note that the sensor 70 is drawn as a loop in the figures, but this is not meant as a limiting feature. The sensor 70 can be implemented as a loop, but also as one or two Hall-sensors and/or by other implementations.

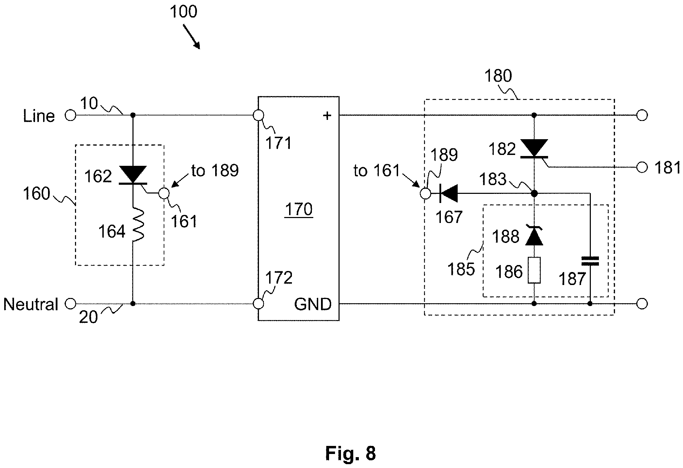

**Fig. 8** shows a schematic circuit diagram of an electronic circuit breaker control unit 100 according to an embodiment. A breaker control circuit 160 is arranged between a Line wire 10 and a Neutral wire 20. The breaker control circuit 160 comprises a first thyristor 162 and a coil 164. The coil 164 may be a part of a relay or a similar breaker 50, and/or may be an inductor acting as a current snubber during voltage surges. The input 161 of the first thyristor 162 is steered by an output 189 of a control subunit 180. Furthermore, the circuit breaker control unit 100 comprises a control subunit 180, supplied by a power supply 170. The control subunit 180 comprises a second thyristor 182, and a filter module 185, which is arranged in series with the second thyristor 182, via a first node 183. The first node 183 is connected to an input 161 of the first thyristor 162 and is configured for driving the first thyristor 162, when an input 181 of the second thyristor 182 is driven by a fault detector 190. The input 181 may, e.g., be driven by a fault detector 190 (not shown).

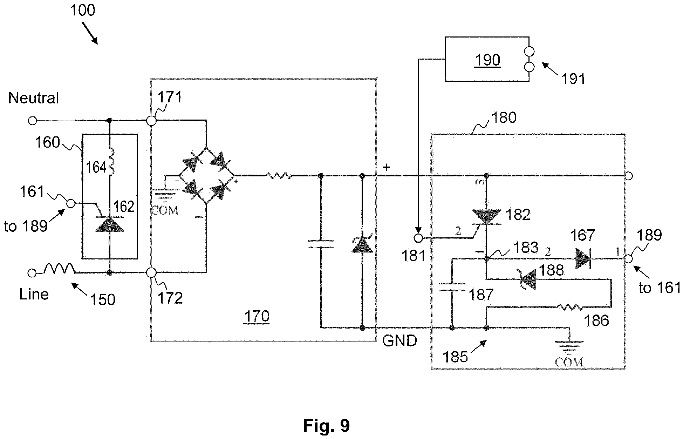

**Fig. 9** shows a further schematic circuit diagram of an electronic circuit breaker control unit 100 according to an embodiment. This diagram is quite similar to the one of **Fig. 8****,** but shows an exemplary implementation of the power supply 170 and a connection to fault detector 190. Furthermore, the breaker 50 (not shown) is controlled by an inductor 150, additionally or as an alternative to coil 164. When used as an alternative to coil 164, that coil 164 may be acting as a current snubber during voltage surges.

In case of a fault, the fault detector 190 sets the gate of SCR 182, which can always be closed, since it is on the DC side. The voltage in connection point 183 therefore increases; its detailed behavior may depend on the filter circuit 185. The SCR 182 may remain closed even if the signal from fault detector 190 is of short duration. When the voltage level in point 183 is enough to drive the gate of SCR 162 via input 161, this second SCR 162 may close. This may happen only in cases, when its anode-cathode voltage is of the correct sign, which may happen in the next half-wave of AC line-voltage. Once the second SCR 162 is closed, the inductor 150 - which functions as an actuator - is energized and the breaker 50 is tripped.

When the second SCR 162 is closed and the actuator inductor 150 is energized, note that the AC side of the power supply circuit 170 is short circuited (the 230V voltage drop now is mainly on the actuator). Therefore, also the voltage on the DC side of the power supply circuit 170 decreases. This sudden decrease allows to nullify or reverse the voltage across the second thyristor 182. Moreover, after main contacts 50 open, the fault is cleared, and the fault detector 190 no longer drives the gate of SCR 182. Consequently, SCR 182 opens. In other words, the closure of SCR 182 enables closure of SCR 162, but closure of SCR 162 enables opening of SCR 182. Instead, SCR 162 is opened since it is on the AC side.

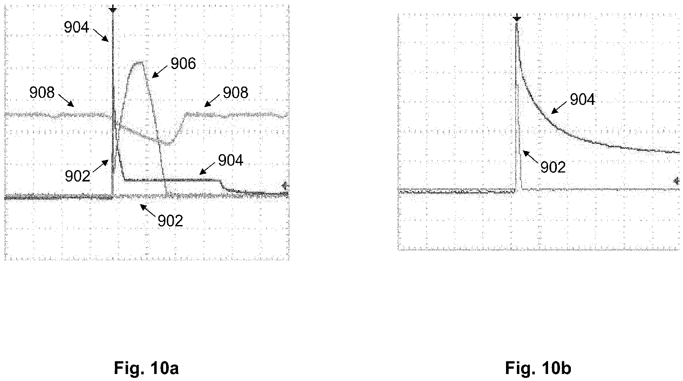

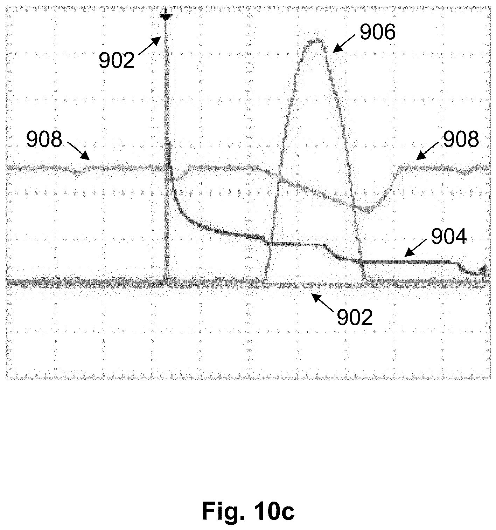

For further explanation, **Fig. 10a** to **10c** show some screenshots of internal signals on nodes of an electronic circuit breaker control unit according to an embodiment. The signals can be measured, for instance, in a configuration where the power supply 170 is arranged upstream of breaker 50, as depicted in **Fig. 6a** and **6b****;** consequently, the power supply 170 is not configured to be interrupted by the breaker 50. All these screenshots show voltage V over time t. The time scale of **Fig. 10b** is 10 time finer than the time scale of **Fig. 10a** and **10c****.** For instance, **Fig. 10a** and **10c** may have a grid of 5 ms, and **Fig. 10b** may have a grid of 0.5 ms. As an example, a tripping scenario due to an AC~50Hz fault is shown. Curve 902 depicts a driving gate signal 181 of SCR 182 (see **Fig. 8** or **9**). This is the "output pulse" of fault detector circuit 190. Note that the pulse's time duration is very short in these figures, but the output of fault detector circuit 190 may be different - e.g. steps or pulses with longer duration - if a different fault detector 190 is selected.

Curve 904 depicts a driving gate signal or input signal 161 of SCR 162. Note that the time duration of curve 904 is significantly longer than the time duration of curve 902. Curve 906 depicts current flowing into the tripping coil actuator 150. It is clearly visible that, in **Fig. 10a** and **10c****,** curve 906 lasts long enough to trip coil actuator 150 (or, in alternative solutions, to trip coil actuator 164). Curve 908 depicts the DC output "+" of voltage supply 170. Note that curve 908 decreases when the tripping actuator 150 is energized, because driving the SCR 162 causes a short-time shortage between Line and Neutral. The rising-angle of this shortage is limited by inductor 164 (see **Fig. 9**). This shortage, on the one hand, energizes trip coil actuator 150 to trip. On the other hand, the shortage causes the decrease or voltage drop of curve 908. This voltage drop of curve 908 is big enough to cause the second SCR 182 to stop, because the SCR 182 has only the voltage difference for operating, which is available between the first node 183 and the output voltage of voltage supply 170. The "rest" of the voltage is the voltage along filter module 185. The filter module 185 may comprise a Zener-diode for a clear definition of the voltage along filter module 185. Consequently, the second SCR 182 stops to drive the first SCR 162, and current through the first SCR 162 is interrupted as soon as the AC-line voltage goes through zero. After tripping, curve 908 comes back to its "normal" value, i.e. after main contacts opening, e.g. in arrangements like the ones shown in **Fig. 6a** or **6b****.** In arrangements like shown in **Fig. 7a** or **7b****,** curve 908 would go to zero.

**Fig. 10c** depicts the same signals as shown in **Fig. 10a** and **10b****,** but during another kind of fault, namely a 270°~50Hz breakdown fault, which may occur during the "negative wave" of an AC-line. Curve 902, again, depicts a driving gate signal 181 of SCR 182, i.e. the "output pulse" of fault detector circuit 190. Note that this causes a small voltage drop in curve 908, but does not affect curve 906, first hand. But, similar to **Fig. 10a****,** the second SCR 182 is driven by signal 181, causing a rise of curve 904, with significantly longer time duration than the time duration of curve 902. The rise of curve 904 lasts long enough, so that the AC-line voltage reaches its "positive wave". Then, the first SCR 162 causes a short-time shortage between Line and Neutral and, as a result, the tripping actuator 150 trips. The rest of the curves is similar to the effects pointed out for **Fig. 10a****,** i.e. voltage drop of curve 908 and stopping second SCR 182. Note that curve 906 of the actuator is energized quite a time after the tripping signal, i.e. curve 902, by the fault detector, since the SCR 162 closes only when there is a positive anode-cathode voltage. Note that the presence of two SCRs, 162 and 182, and of the filtering module 185 allows to trip the breaker 50 also in this situation.

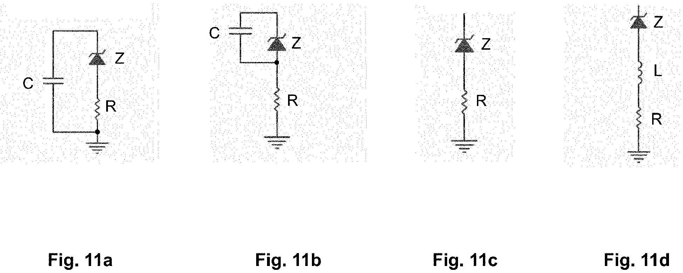

**Fig. 11a** to **11h** show a couple of implementation-alternatives for a filter module 185 of an electronic circuit breaker control unit 100 according to an embodiment. The top line is first node 183, the bottom is GND. In some embodiments, the capacitance C may correspond to capacitance 187 of **Fig. 8** or **9****,** the resistor or resistance R to resistor 186, and the Zener-diode Z to Zener-diode 188.

**Fig. 11a** shows a 1^{st} order filter with Zener-diode Z, capacitance C, and resistance R; R and C arranged in parallel. **Fig. 11b** shows a 1^{st} order filter with Zener-diode Z, capacitance C, and resistance R; R and C, and R and Z, are arranged in series. **Fig. 11c** shows a voltage drop circuit filter with Zener-diode Z and resistance R; R and Z arranged in series. **Fig. 11d** shows a 1^{st} order filter with Zener-diode Z, resistance R, and inductance L; L and R arranged in series.

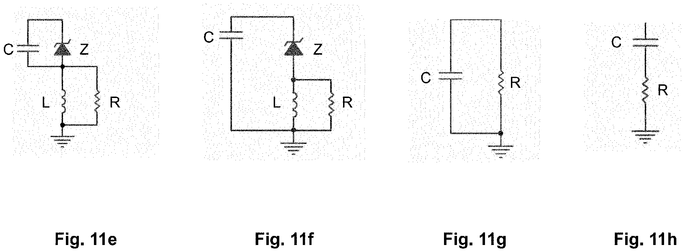

**Fig. 11e** shows a 2^{nd} order filter with Zener-diode Z, inductance L, capacitance C, and resistance R; R and C arranged in series. **Fig. 11f** shows a 2^{nd} order filter with Zener-diode Z, inductance L, capacitance C, and resistance R; R and C arranged in parallel. **Fig. 11g** shows a 1^{st} order filter with capacitance C and resistance R; R and C arranged in parallel. **Fig. 11h** shows a 1^{st} order filter with capacitance C and resistance R; R and C arranged in series.

### List of Reference Symbols

- 10: Line wire
- 20: Neutral wire
- 30: load
- 50: breaker, mechanical breaker
- 70: sensor loop
- 90: control unit
- 100: control unit
- 150: coil actuator
- 160: control circuit
- 161: input
- 162: first thyristor
- 164: coil, inductor
- 167: diode
- 170: supply circuit
- 180: control subunit
- 181: input
- 182: second thyristor
- 183: first node
- 185: filter module
- 186: resistor R
- 187: capacitor C
- 188: Zener-diode
- 189: output
- 190: fault detector
- 191: input
- 902 - 908: curves

## Claims

1. An electronic circuit breaker control unit (100), comprising:
a first thyristor (162), configured for driving a breaker (50) when conducting; and
a control subunit (180), comprising:
a second thyristor (182), and a filter module (185), arranged in series with the second thyristor (182) via a first node (183),
wherein the first node (183) is connected to an input (161) of the first thyristor (162) and is configured for driving the first thyristor (162), when an input (181) of the second thyristor (182) is driven by a fault detector (190).

2. The electronic circuit breaker control unit (100) of claim 1,
wherein the control subunit (180) is supplied by a power supply (170), which is connected to a main power supply (10, 20) in a way that it is not interruptable by the breaker (50).

3. The electronic circuit breaker control unit (100) of claim 1,
wherein the control subunit (180) is supplied by a power supply (170), whose power of the power supply (170) is interruptable by the breaker (50), and
the mechanical breaker (50) is configured to interrupt power from the power supply (170), when the first thyristor (162) is conducting.

4. The electronic circuit breaker control unit (100) according to any one of the preceding claims,
wherein the filter module (185) comprises a Zener-diode (188) arranged between the first node (183) and a resistor (186) of the filter module (185).

5. The electronic circuit breaker control unit (100) according to any one of the preceding claims,
wherein a diode (167) is arranged between the first node (183) and the input (161) of the first thyristor (162).

6. The electronic circuit breaker control unit (100) according to any one of the preceding claims,
wherein the fault detector (190) outputs a one-shot pulse when detecting a fault.

7. The electronic circuit breaker control unit (100) according to any one of the preceding claims,
wherein an inductor (150) is arranged between the first thyristor (162) and a Line feed wire (10) and/or a Neutral feed wire (20).

8. An arc fault detection device, AFDD, an arc fault circuit interrupter, AFCI, and/or a residual-current device, RCD, comprising an electronic circuit breaker control unit (100) according to any one of the preceding claims.

9. Use of an electronic circuit breaker control unit (100) according to any one of the claims 1 to 7 or a device according to claim 8 for interrupting a main supply when a fault is detected on the main supply.

10. Use of an electronic circuit breaker control unit (100) according to claim 9, wherein the main supply is an AC-line or a DC-line.
